# EUROPEAN PATENT SPECIFICATION

(11) **EP 1 331 834 B1**
(45) Date of publication and mention of the grant of the patent: **13.09.2006**
(21) Application number: 03000656.3
(22) Date of filing: 16.01.2003
(51) Int. Cl.: H04Q 11/04, H04L 12/56

(54) **Virtual Path reservation device for multi protocol label switching MPLS networks**
Vorrichtung zur Reservierung von virtuellen Pfaden in MPLS (Multi Protocol Label Switching) Netzen
Dispositif pour la réservation de chemins virtuels dans des reseaux du type MPLS (Multi Protocol Label Switching)

(30) Priority: 24.01.2002 KR 2002004128
(43) Date of publication of application: 30.07.2003
(73) Proprietor: SAMSUNG ELECTRONICS CO., LTD., Suwon-City, Kyungki-do (KR)
(72) Inventor: Whon, Song, dong, Paldal-gu; Suwon city; Gyeonggi-do (KR)
(74) Representative: Lang, Johannes

(56) References cited:
- EP-A- 0 881 854
- AWDUCHE D O ET AL: "RSVP-TE: Extensions to RSVP for LSP Tunnels" XP002199928 Retrieved from the Internet: <URL: http://www.awduche.com/> [retrieved on 2002-05-15] * abstract * Chapter 1 Introduction and Chapter 2 Overview
- LE FAUCHEUR F: "IETF Multiprotocol Label Switching (MPLS) Architecture" IEEE INTERNATIONAL CONFERENCE ON ATM, 22 June 1998 (1998-06-22), pages 6-15, XP002115225
- ASH J ET AL: "LSP Modification Using CR-LDP" XP002199717 Retrieved from the Internet: <URL: http://www.ietf.org/proceedings/01aug/I-D/ draft-ietf-mpls-crlsp-modif y-03.txt> [retrieved on 2002-05-22] * abstract * Chapter 4 LSP Modification using CR-LDP

## Description

### BACKGROUND OF THE INVENTION

### Technical Field

The present invention relates to a traffic_engineering scheduling device for multi protocol label switching (MPLS) performing generation, modification, and deletion of the traffic_engineering path by activating or inactivating functions of dynamic traffic_engineering according to the time characteristic through a time_attributed parameter reflecting traffic characteristic in each subscriber.

### Related Art

Recently, as data traffic increases explosively according to increases of web surfers, requests for quality of service (QoS) and service availability are increased rapidly. For satisfying such requests, and for transmitting a packet from a source host to a destination host, the multi protocol label switching (MPLS), the standard in internet engineering task force (IETF) defines a multi protocol label switching (MPLS) signaling protocol for exchanging label information generated from routing information, a process of generating and deleting a label, and a process technology for passing a predetermined packet through a traffic_engineering path by allocating traffic information for traffic_engineering and explicit path information to a label.

Multi protocol label switching (MPLS) simplifies forwarding functions to provide traffic_engineering functions for improving transmission speed and quality of service (QoS), and for responding to data traffic dynamically. Therefore, the multi protocol label switching (MPLS) is widely applied in the surroundings of high speed switching networks, such as asynchronous transfer mode asynchronous transfer mode (ATM) switching networks, or frame relay networks.
Although not directed specifically to MPLS, EP-A-0 881 854 discloses a device for performing reservation control by setting up a permanent virtual connection using virtual connection units by marking communications with each network element device.
The paper "RSVP-TE: EXTENSIONS TO RSVP FOR LSP TUNNELS", (XP-002199928 Network Working Group, Internet Draft, Awduche, et al., February 2001) describes the use of RSVP to establish label-switched paths in MPLS.
The paper "IETF MULTIPROTOCOL LABEL SWITCHING (MPLS) ARCHITECTURE" (XP-002115225, LeFaucheur, IEEE 1998) describes the concepts of MulitProtocol Label Switching (MPLS) under standardization by the Internet Engineering Task Force (IETF), and describes amongst others how labels are assigned and distributed in MPLS.

Due at least in part to the rapid expansion of the use of the Internet or World Wide Web, it is believed that there is a need for more improvements related to multi protocol label switching (MPLS). To improve traffic-engineering functions related to multi protocol label switching (MPLS), it would be helpful if a traffic_engineering scheduling device were available for multi protocol label switching (MPLS), with the traffic-engineering scheduling device activating traffic_engineering functions dynamically to generate, modify, or create traffic_engineering path to cope with data traffic time, and to provide services of better quality to subscribers.

### SUMMARY OF THE INVENTION

To overcome the above described problems, the present invention provides a scheduling device for multi protocol label switching (MPLS) as defined in independent claim 1.
Further preferred embodiments are subject of the dependent claims.

The present invention is more specifically described in the following paragraphs by reference to the drawings attached only by way of example. Other advantages and features will become apparent from the following description and from the claims.

### BRIEF DESCRIPTION OF THE DRAWINGS

In the accompanying drawings, which are incorporated in and constitute a part of this specification, embodiments of the invention are illustrated, which, together with a general description of the invention given above, and the detailed description given below, serve to exemplify the principles of this invention.

FIG. 1 is a schematic configuration of an exemplary communication network supporting a multi protocol label switching (MPLS);

FIG. 2 is a schematic diagram related to setting a label switched path (LSP) in the exemplary node configuration of FIG. 1.;

FIG. 3 is a block configuration diagram of a traffic_engineering scheduling device for multi protocol label switching (MPLS), in accordance with the principles of the present invention;

FIG. 4 is an operation flow chart of the traffic_engineering scheduling device for multi protocol label switching (MPLS), in accordance with the principles of the present invention; and

FIG. 5 illustrates an example of time_attributed parameter inputted by an operator, in accordance with the principles of the present invention.

### DETAILED DESCRIPTION OF PREFFERED EMBODIMENTS

While the present invention will be described more fully hereinafter with reference to the accompanying drawings, in which details of the present invention are shown, it is to be understood at the outset of the description which follows that persons of skill in the appropriate arts may modify the invention here described while still achieving the favorable results of this invention. Accordingly, the description which follows is to be understood as being a broad, teaching disclosure directed to persons of skill in the appropriate arts, and not as limiting upon the present invention.

Illustrative embodiments of the invention are described below. In the interest of clarity, not all features of an actual implementation are described. In the following description, well-known functions, constructions, and configurations are not described in detail since they could obscure the invention with unnecessary detail. It will be appreciated that in the development of any actual embodiment numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill having the benefit of this disclosure.

Exemplars of recent efforts in the art are disclosed, for example, in U.S. Patent No. 6,430,154 to Hunt *et al*., entitled *SUPPORTING MULTIPLE APPLICATION TRAFFIC TYPES OVER CONNECTION ORIENTED NETWORKS,* issued on August 6, 2002, U.S. Patent No. 6,385,198 to Ofek *et al.,* entitled *SIGNALING FOR TIMELY FORWARDING IN PACKET SWITCHING NETWORK WITH A COMMON TIME REFERENCE,* issued on May 7, 2002, U.S. Patent No. 6,377,579 to Ofek, entitled *INTERCONNECTING A SYNCHRONOUS SWITCHING NETWORK THAT UTILIZES A COMMON TIME REFERENCE WITH AN ASYNCHRONOUS SWITCHING NETWORK,* issued on April 23, 2002, U.S. Patent No. 6,330,614 to Aggarwal *et al*., entitled *INTERNET AND RELATED NETWORKS, A METHOD OF AND SYSTEM FOR SUBSTITUTE USE OF CHECKSUM FIELD SPACE IN INFORMATION PROCESSING DATAGRAM HEADERS FOR OBVIATING PROCESSING SPEED AND ADDRESSING SPACE LIMITATIONS AND PROVIDING OTHER FEATURES,* issued on December 11, 2001, U.S. Patent No. 6,259,695 to Ofek, entitled *PACKET TELEPHONE SCHEDULING WITH COMMON TIME REFERENCE,* issued on July 10, 2001, and U.S. Patent No. 6,038,230 to Ofek, entitled *PACKET SWITCHING WITH COMMON TIME REFERENCE OVER INKS WITH DYNAMICALLY VARYING DELAYS,* issued on March 14, 2000. While these contemporary efforts contain merit, it is my observation that further improvements can also be contemplated.

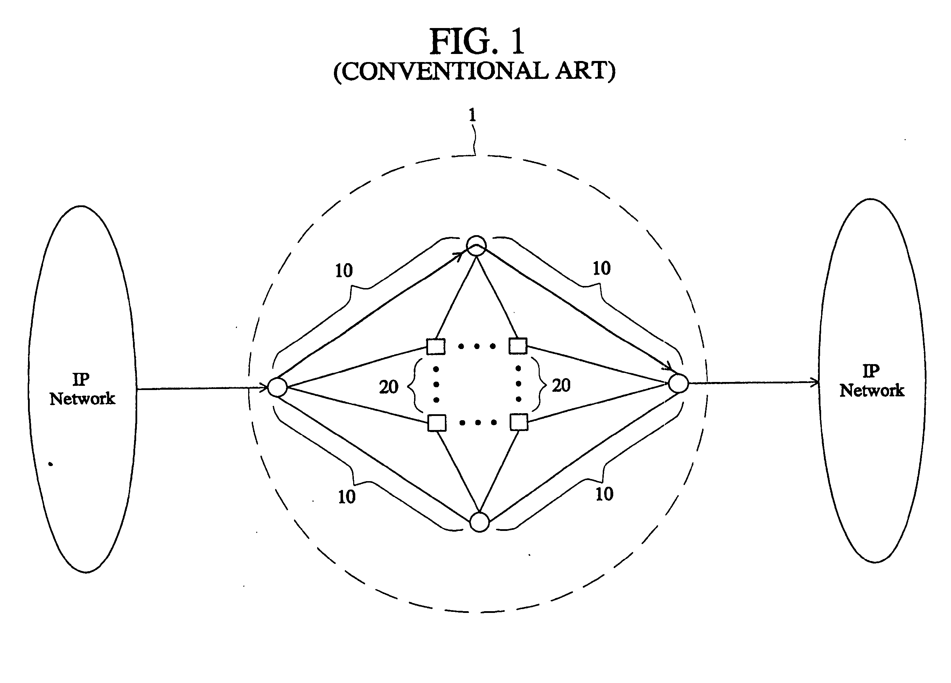

FIG. 1 is a schematic configuration of an exemplary communication network supporting a multi protocol label switching (MPLS). The FIG. 1 shows a network configuration illustrating exemplary multi protocol label switching (MPLS) communication networks schematically. Referring to FIG. 1, the multi protocol label switching (MPLS) network 1 comprises multiple nodes 10 and 20, such as multiple label edge routers (LER) 10 and multiple label switch routers (LSR) 20, connected mutually among them.

A fixed path from each node to other node, in other words a label switched path (LSP), is determined by the multi protocol label switching (MPLS) signaling protocol according to a path setting information from routing table information or manual operations. Therefore, a transmission of the Internet protocol (IP) packet within the multi protocol label switching (MPLS) networks 1 is accomplished through a pre_defined label switched path (LSP) actually.

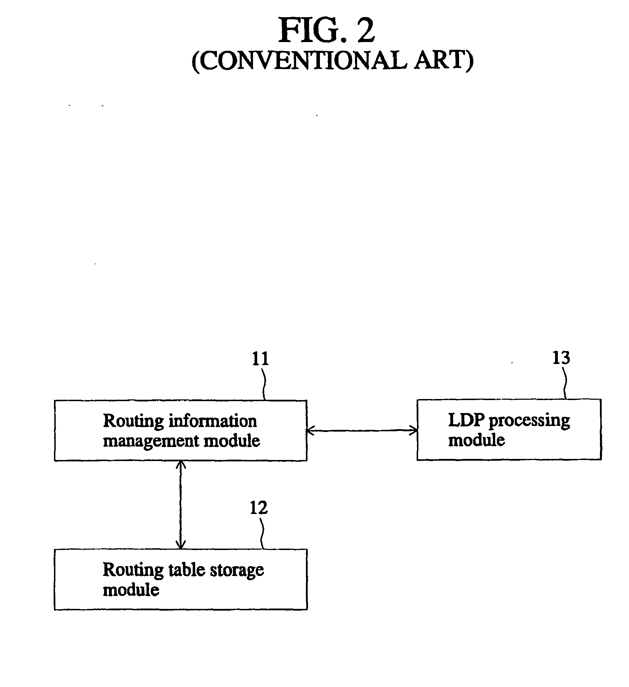

FIG. 2 is a schematic diagram related to setting a label switched path (LSP) in the exemplary node configuration of FIG. 1. Each node includes a routing table storage module 12, a routing information management module 11, and a multi protocol label switching (MPLS) signaling protocol procedure module or a label distribution protocol (LDP) procedure module 13.

The routing table storage module 12 functions as a storage of a destination address and a next hop address during setting a routing path. The routing information management module 11 interchanges routing information with an adjacent node through a routing protocol, modifies and manages routing table information stored in the routing table, and functions as transmitting the routing information to the multi protocol label switching (MPLS) signaling protocol procedure module or the label distribution protocol (LDP) procedure module 13.

In this case, the routing protocol adopts a routing information protocol (RIP), an open shortest path first (OSPF), and a border gateway protocol (BGP). The multi protocol label switching (MPLS) signaling protocol procedure module or the label distribution protocol (LDP) procedure module 13 adopts an allocated label based on the routing information from the routing information management module 11, and transmits the predefined routing information loaded in a label_request message, generated from the multi protocol label switching (MPLS) signaling protocol procedure module or the label distribution protocol (LDP) procedure module 13, to the next node.

The multi protocol label switching (MPLS) system including the above described multiple nodes sets a label switched path (LSP) through the established routing table. At first, a source node of the multi protocol label switching (MPLS) system refers to the routing table including the destination address and the next hop address to set an label switched path (LSP) to a destination node, and transmits the label_request message to the next hop address to allocate an label to the destination address.

Sequentially, the adjacent node corresponding to the next hop address analyzes a forwarding equivalent class (FEC) included in the label_request message to allocate an input label, reports the allocation result of the input label to the previous node that had transmitted the label_request message, and also transmits the label_request message having the predefined routing information to the next node to get an output label.

Therefore, the label switched path (LSP) is set for performing data packet transmission from the source node to the destination node through the above described procedures, and data transmission is performed through the fixed label switched path (LSP). In other words, by best effort services for transmitting packet data through utilizing address information of the destination node only, the data transmission services are achieved.

However, because such best effort services can not satisfy requirements for treating rapid increased data traffic sufficiently, the multi protocol label switching (MPLS) usually supports traffic_engineering functions.

The traffic_engineering functions means functions of setting traffic information, such as bandwidth, to a predetermined path by a protocol dynamically, or by an operator manually, and functions of setting a transmission path without concerning to routing information through establishing explicitly node information for packet transmission to a predetermined destination node.

Such traffic_engineering functions are activated when an operator inputs manually a setting value to generate, to change a new traffic_engineering path, or to delete the pre_defined traffic_engineering path.

However, when the traffic_engineering path is generated, changed or deleted by the operator, dynamic traffic_engineering functions during long term operation cannot be performed effectively. In other words, when data traffic of subscribers is changed periodically _ for example, a school or a company having much data traffic during daytime, but less data traffic at night, or an adult broadcasting station having less data traffic during daytime, but much data traffic at night _ it will be effective to provide traffic_engineering functions of better quality for much data traffic time. However, in the exemplary system, an operator should activate manually each of the traffic_engineering functions in the data traffic time. Therefore, the exemplary system does not provide dynamic traffic_engineering functions, but static traffic_engineering functions only.

Therefore, it is required to develop a traffic_engineering scheduling device for a multi protocol label switching (MPLS), activating traffic_engineering functions dynamically to generate, modify, or create traffic_engineering path to cope with data traffic time, and to provide services of better quality to subscribers.

Reference will now be made in detail to preferred embodiments of the present invention, example of which is illustrated in the accompanying drawings. Additionally, the same reference number is denoted to the same devices and components for the convenience of understanding, even though the devices or the components in drawings belong to another drawings.

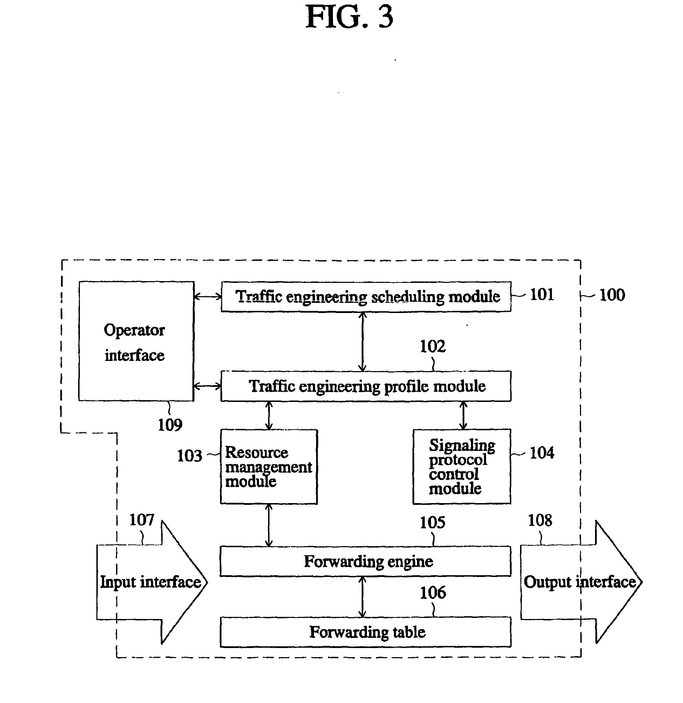

FIG. 3 is a block configuration diagram of a traffic_engineering scheduling device for multi protocol label switching (MPLS), in accordance with the principles of the present invention. Referring to FIG. 3, the multi protocol label switching (MPLS) device 100 of the present invention comprises an operator interface 109, a traffic_engineering profile module 102, a traffic_engineering scheduling module 101, a signaling protocol control module 104, a resource management module 103, a forwarding engine 105, a forwarding table 106, an input interface 107, and an output interface 108.

The operator interface 109 provides operator terminal functions for an operator to control the multi protocol label switching (MPLS) system including the traffic_engineering schedule module 101. Therefore, the operator inputs various control information related to traffic engineering, such as subscriber information, various traffic_engineering parameter information, and traffic_engineering time_attributed parameter information, to the corresponding modules 101 and 102. The operator can check the following results.

The traffic engineering profile module 102 performs functions of receiving, and of processing configuration profiles of service information, such as subscriber information, explicit hop information, quality of service (QoS) parameter information, and forwarding equivalent class (FEC) information.

The traffic_engineering scheduling module 101 receives activation of the traffic engineering, in other words time_attributed parameter related to generating, modifying, and deleting traffic_engineering path, and controls the generation, modification, and deletion of the traffic_engineering path in time schedule.

The signaling protocol control module 104 controls protocols, such as a constrained_based label distribution protocol (CR_LDP) or a resource reservation protocol_traffic engineering (RVSP_TE) for configuring actual routing path, to generate or modify or delete a traffic_engineering path in a time corresponding to the time_attributed parameter predefined in the traffic_engineering scheduling module 101.

The resource management module 103 manages various multi protocol label switching (MPLS) resources, such as label information, inner resource information, and header information in network hierarchical layers for performing traffic_engineering functions, and transmits the multi protocol label switching (MPLS) resources to another module when necessary.

The forwarding engine 105 fabricates packet transmission information from the resource management module 103, and stores the fabricated packet transmission information to the forwarding table 106. The forwarding engine 105 analyzes the network hierarchical header of the packet information received from the input interface 107, attaches a label for a multi protocol label switching (MPLS) recorded in the forwarding table 106, and transmits the packet information to the next node through the output interface 108.

The forwarding table 106 performs mapping to the network hierarchical header, label, and interface information stored by the forwarding engine 105. The input interface 107 interfaces with un_labeled packet information inputted to a label edge router (LER), and the output interface 108 interfaces with labeled packet information outputted to the next node.

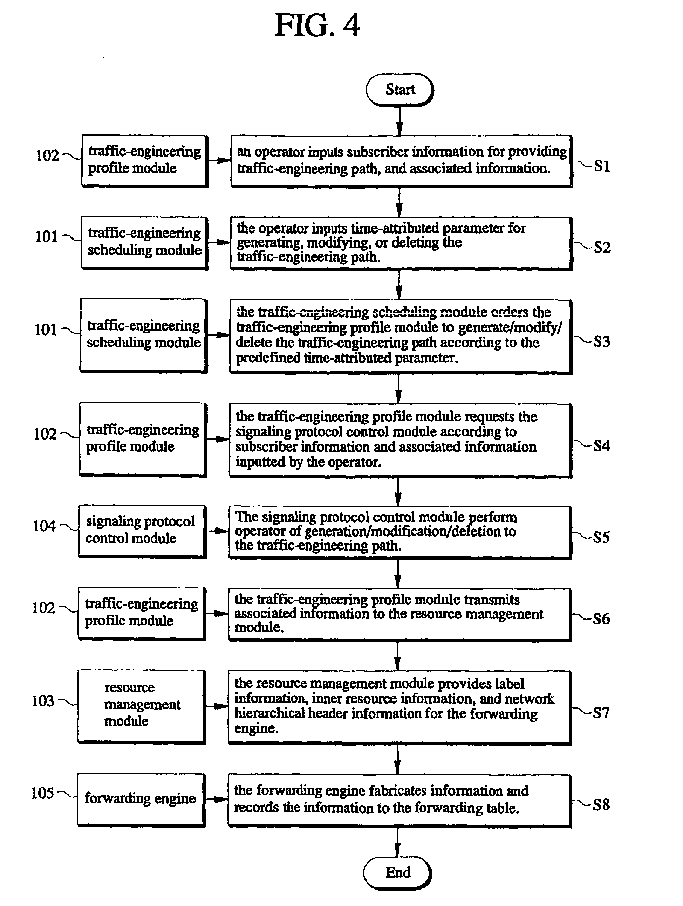

FIG. 4 is an operation flow chart of the traffic_engineering scheduling device for multi protocol label switching (MPLS), in accordance with the principles of the present invention. At step S1, for providing dynamic traffic engineering functions while time passes, an operator inputs associated information, such as subscriber information for providing traffic_engineering path, explicit hop information predefined to the corresponding path, quality of service (QoS) parameter information, and forwarding equivalent class (FEC) information, to the traffic_engineering profile module 102 through the operator interface 109.

At step S2, additionally, by utilizing the above described method, the operator inputs time_attributed parameter for generating, modifying, or deleting the traffic_engineering path, such as start time, end time, period, and another property, to the traffic_engineering scheduling module 101.

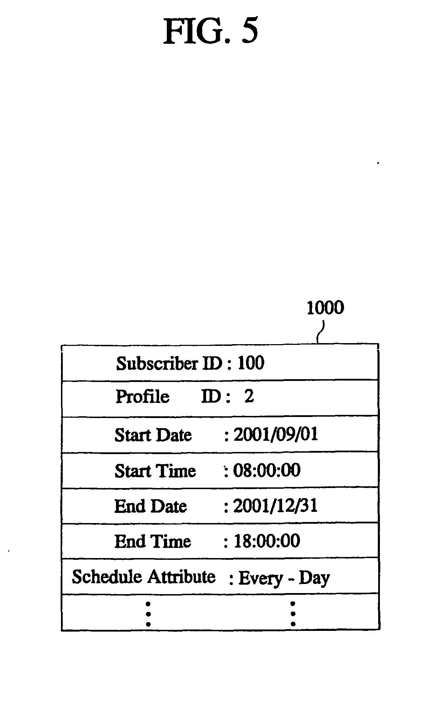

FIG. 5 illustrates an example of time_attributed parameter inputted by an operator, in accordance with the principles of the present invention. The FIG. 5 shows time-attributed parameter 1000. Referring to FIG. 5, the number 100 is allocated to a subscriber identifier or identification number (ID) providing traffic_engineering functions, and the number 2 is allocated to an identification number (ID) of a traffic_engineering path provided to the subscriber.

Additionally, September 1, 2001 is allocated to a start date of the traffic_engineering functions provided to the subscriber, in other words generation, modification, or deletion date of the traffic_engineering path. The start time is set to 8:00, the end date for traffic_engineering functions is December 31, 2001, the end time is set to 18:00, and a schedule attribute is set to everyday.

At step S3, the traffic_engineering scheduling module 101 receives the time_attributed parameter 1000 by the operator and orders the traffic_engineering profile module 102 to generate/modify/delete the traffic_engineering path to provide the traffic_engineering functions according to the predefined time_attributed parameter.

In other words, at step S3, the traffic_engineering scheduling module 101 receives the time_attributed parameter 1000 by the operator and orders the traffic_engineering profile module 102 to generate or modify or delete the traffic_engineering path to provide the traffic_engineering functions according to the predefined time_attributed parameter.

At step S4, sequentially, the traffic engineering profile module 102 requests the signaling protocol control module 104 to generate/modify/delete the traffic_engineering path to the subscriber having an ID of 100 according to subscriber information and associated information inputted by the operator.

At step S5, the signaling protocol control module 104 controls protocols, such as constrained_based label distribution protocol (CR_LDP) or a resource reservation protocol_traffic engineering (RSVP_TE), following to the above requests to perform operations of generation/modification/deletion to the traffic_engineering path, and reports the operation result to the traffic_engineering profile module 102.

At step S6, after receiving the operation result, the traffic_engineering profile module 104 transmits associated information to the resource management module 103. At step S7, sequentially, for the generated/modified/deleted traffic_engineering path, the resource management module 103 provides label information, inner resource information, and network hierarchical header information for the forwarding engine 105.

At step S8, the forwarding engine 105 fabricates information received from the resource management module 103, and records the information to the forwarding table 106. Additionally, an un_labeled packet arriving to the input interface 107 is transmitted into a label packet through the output interface 108 according to the records of the forwarding table 106.

As a result, by adding parameter related to the time_attributed parameter 1000 to the traffic_engineering parameter by the operator, the traffic_engineering path 2 is generated, and the services of traffic engineering functions can be provided to the subscriber of ID 100 from 8:00 to 18:00 everyday during period of September 1, 2001 to December 31, 2001.

To reflect time characteristic of the subscriber in maximum, the setting value in time_attributed parameter is segmented more narrowly to add parameter through the traffic_engineering scheduling module. Therefore, the time characteristic can be applied in maximum.

As described in the above statements, the present invention activates traffic_engineering functions dynamically through the time_attributed parameter reflecting time characteristics of each of the subscribers in the multi protocol label switching (MPLS) system to schedule generation/modification/deletion of the traffic_engineering path. Therefore, services of better quality can be supplied to fit on the requests of the subscribers.

For subscribers, such as a company or a school, service of better quality can be supplied in daytime, and normal best effort services can be supplied at night, because the subscribers get much data traffic in daytime. On the contrary, for subscribers, such as adult broadcasting station, service of better quality can be supplied at night, and normal best effort services can be supplied in daytime, because the subscribers get much data traffic at night.

Therefore, it is possible to develop a communication product, or data services changing dynamically the service quality or contents depending on time. As a result, various types of communication products can be developed, and various services can be supplied to subscribers. The telecommunication carrier can maximize efficiency in the network in itself, and even in the marketing fields for the network.

If the traffic-engineering schedule module 101 and traffic-engineering profile module 102 are combined together to form one unit, that one unit can be referred to as a first module. In this case, the signaling protocol control module 104 can be referred to as a second module.

## Claims

1. A scheduling device for multi protocol label switching MPLS, the device comprising:
a traffic_engineering profile module (102) for receiving subscriber information including traffic_engineering path and receiving information related to the traffic_engineering path;
a traffic_engineering scheduling module (101) for receiving a time_attributed property corresponding to at least one selected from among generating the traffic_engineering path, modifying the traffic_engineering path, and deleting the traffic_engineering path;
said traffic_engineering scheduling module (101) being capable of sending instructions to said traffic_engineering profile module (102) to perform at least one selected from among said generating of the traffic_engineering path, said modifying of the traffic_engineering path, and said deleting of the traffic_engineering path;
said traffic_engineering profile module (102) being capable of sending request signals in accordance with the instructions received from said traffic_engineering scheduling module (101), said traffic_engineering scheduling module (101) comprising a resource management module (103) for receiving the information related to the traffic_engineering path from said traffic_engineering profile module (102), for outputting label information, for outputting inner resource information, for outputting network hierarchical header information, and for managing resources related to multi protocol label switching MPLS; and
a signaling protocol control module (104) for receiving the request signals from said traffic_engineering profile module (101), said signaling protocol control module (104) being capable of controlling a signaling protocol for constructing a routing path, said signaling protocol control module (104) being capable of performing at least one selected from among said generating of the traffic_engineering path, said modifying of the traffic_engineering path, and said deleting of the traffic_engineering path in dependence upon the received signals.

2. The device of claim 1, said traffic_engineering scheduling module (101) further comprising:
a forwarding engine means (105) for receiving the outputted label, inner resource, and network hierarchical header information, said forwarding engine means (105) analyzing and fabricating the network hierarchical header information.

3. The device of claim 2, said traffic_engineering scheduling module (101) further comprising:
a forwarding table means (106) for recording the network hierarchical header information fabricated by the forwarding engine means (105).

4. The device of any of claims 1 to 3, the information related to the traffic_engineering path including an explicit hop address, a quality of service parameter, and forwarding equivalent class FEC information.

5. The device of any of claims 1 to 3, the signaling protocol including at least one selected from among a constrained_based label distribution protocol CR_LDP and a resource reservation protocol_traffic engineering RVSP_TE.

6. The device of claim 5, the time_attributed property including at least one selected from among a start time, an end time, and a time period.

7. The device of claim 6, the start time corresponding to a time to start performing at least one selected from among said generating of the traffic_engineering path, said modifying of the traffic_engineering path, and said deleting of the traffic_engineering path.

8. The device of claim 7, the end time corresponding to a time to stop performing at least one selected from among said generating of the traffic_engineering path, said modifying of the traffic_engineering path, and said deleting of the traffic_engineering path.

9. The device of claim 8, the time period corresponding to a period of time for performing at lest one selected from among said generating of the traffic_engineering path, said modifying of the traffic_engineering path, and said deleting of the traffic_engineering path.

## Patentansprüche

1. Schedulingvorrichtung zum Multiprotokoll Label Switching MPLS, wobei die Vorrichtung umfasst:
ein Traffic_engineering Profilmodul (102) zum Empfangen von Abonnenteninformation, welche Traffic_engineering Pfad und Empfangsinformation, die sich auf den Traffic_engineering Pfad bezieht, umfasst;
ein Traffic_engineering Schedulingmodul (101) zum Empfangen einer mit einem Zeitattribut versehenen Eigenschaft entsprechend zumindest einer gewählt unter Erzeugen des Traffic_engineering Pfads, Modifizieren des Traffic_engineering Pfads und Löschen des Traffic_engineering Pfads;
wobei das Traffic_engineering Schedulingmodul (101) in der Lage ist, Anweisungen an das Traffic_engineering Profilmodul (102) zu senden, um zumindest eines auszuführen gewählt unter dem Erzeugen des Traffic_engineering Pfads, dem Modifizieren des Traffic_engineering Pfads und dem Löschen des Traffic_engineering Pfads;
wobei das Traffic_engineering Profilmodul (102) in der Lage ist, Anforderungssignale in Übereinstimmung mit den Anweisungen zu senden, welche von dem Traffic_engineering Schedulingmodul (101) empfangen wurden, wobei das Traffic_engineering Schedulingmodul (101) ein Ressourcenverwaltungsmodul (103) umfasst zum Empfangen der Information, die sich auf den Traffic_engineering Pfad bezieht, von dem Traffic_engineering Profilmodul (102), zum Ausgeben von Labelinformation, zum Ausgeben von innerer Ressourceninformation, zum Ausgeben von Netzwerk-hierarchischer Headerinformation, und zum Verwalten von Ressourcen mit Bezug auf Multiprotokoll Label Switching MPLS; und
ein Signalisierungsprotokollkontrollmodul (104) zum Empfangen der Anforderungssignale von dem Traffic_engineering Profilmodul (101), wobei das Signalisierungsprotokollkontrollmodul (104) eingerichtet ist, ein Signalisierungsprotokoll zur Erstellung eines Routingpfades zu kontrollieren,
wobei das Signalisierungsprotokollkontrollmodul (104) eingerichtet ist, zumindest eines auszuführen gewählt unter dem Erzeugen des Traffic_engineering Pfads, dem Modifizieren des Traffic_engineering Pfads und dem Löschen des Traffic_engineering Pfads in Abhängigkeit von den empfangenen Signalen.

2. Vorrichtung nach Anspruch 1, wobei das Traffic_engineering Schedulingmodul (101) ferner umfasst:
ein Weiterleitungswerkmittel (105) zum Empfangen des ausgegebenen Labels, Innerer Ressource und Netzwerk-hierarchischer-Headerinformation, wobei das Weiterleitungswerkmittel (105) die Netzwerk-hierarchische-Headerinformation analysiert und erstellt.

3. Vorrichtung nach Anspruch 2, wobei das Traffic_engineering Schedulingmodul (101) ferner umfasst:
ein Weiterleitungstabellenmittel (106) zum Aufzeichnen der durch das Weiterleitungswerkmittel (105) erstellten Netzwerk-hierarchischen-Headerinformation.

4. Vorrichtung nach einem der Ansprüche 1 bis 3, wobei die Information, welche sich auf den Traffic_engineering Pfad bezieht, eine explizite Hop-Adresse, einen Dienstequalitätsparameter und Weiterleitungs-Äquivalenzklasse FEC Information umfasst.

5. Vorrichtung nach einem der Ansprüche 1 bis 3, wobei das Signalisierungsprotokoll zumindest eines umfasst gewählt unter einem nebenbedingungsbasiertem Label Distributionsprotokoll CR_LDP und einem Ressourcenreservierungsprotokoll Traffic_engineering RVSP_TE.

6. Vorrichtung nach Anspruch 5, wobei die mit einem Zeitattribut versehene Eigenschaft zumindest eine umfasst ausgewählt unter einer Anfangszeit, einer Endzeit und einer Zeitperiode.

7. Vorrichtung nach Anspruch 6, worin die Anfangszeit einer Zeit entspricht, um zu Beginnen mindest eines Auszuführen gewählt unter dem Erzeugen des Traffic_engineering Pfads, dem Modifizieren des Traffic_engineering Pfads und dem Löschen des Traffic_engineering Pfads.

8. Vorrichtung nach Anspruch 7, wobei die Endzeit einer Zeit entspricht, um Aufzuhören, zumindest eines Auszuführen gewählt unter dem Erzeugen des Traffic_engineering Pfads, dem Modifizieren des Traffic_engineering Pfads und dem Löschen des Traffic_engineering Pfads.

9. Vorrichtung nach Anspruch 8, worin die Zeitperiode einer Periode an Zeit entspricht zum Ausführen zumindest eines gewählt unter dem Erzeugen des Traffic_engineering Pfads, dem Modifizieren des Traffic_engineering Pfads und dem Löschen des Traffic_engineering Pfads.

## Revendications

1. Dispositif d'ordonnancement pour la commutation multiprotocole par étiquettes (MPLS, pour « *Multi Protocol Label Switching* »), le dispositif comprenant :
un module de profil d'ingénierie du trafic (102), destiné à recevoir des informations sur les abonnés, notamment un chemin d'ingénierie du trafic, et à recevoir des informations relatives à un chemin d'ingénierie du trafic ;
un module d'ordonnancement d'ingénierie du trafic (101), destiné à recevoir une propriété de temps attribué correspondant à au moins une action sélectionnée parmi les suivantes : production du chemin d'ingénierie du trafic, modification du chemin d'ingénierie du trafic et suppression du chemin d'ingénierie du trafic ;
ledit module d'ordonnancement d'ingénierie du trafic (101) étant capable d'envoyer des instructions audit module de profil d'ingénierie du trafic (102) afin d'exécuter au moins une action sélectionnée parmi les suivantes : ladite production du chemin d'ingénierie du trafic, ladite modification du chemin d'ingénierie du trafic et ladite suppression du chemin d'ingénierie du trafic ;
ledit module de profil d'ingénierie du trafic (102) étant capable d'envoyer des signaux de demande en fonction des instructions reçues dudit module d'ordonnancement d'ingénierie du trafic (101), ledit module d'ordonnancement d'ingénierie du trafic (101) comprenant un module de gestion des ressources (103) destiné à recevoir les informations relatives au chemin d'ingénierie du trafic dudit module de profil d'ingénierie du trafic (102), à fournir en sortie des informations d'étiquette, à fournir en sortie des informations internes de ressources, à fournir en sortie des informations d'en-tête hiérarchique de réseau et à gérer des ressources liées à la commutation multiprotocole par étiquettes (MPLS) ; et
un module de commande du protocole de signalisation (104), destiné à recevoir les signaux de demande dudit module de profil d'ingénierie du trafic (101), ledit module de commande du protocole de signalisation (104) étant capable de commander un protocole de signalisation afin de construire un chemin de routage, ledit module de commande du protocole de signalisation (104) étant capable d'exécuter au moins une action sélectionnée parmi les suivantes : ladite production du chemin d'ingénierie du trafic, ladite modification du chemin d'ingénierie du trafic et ladite suppression du chemin d'ingénierie du trafic, en fonction des signaux reçus.

2. Dispositif selon la revendication 1, ledit module d'ordonnancement d'ingénierie du trafic (101) comprenant en outre :
un moyen de moteur d'acheminement (105), destiné à recevoir l'étiquette, les ressources internes et les informations d'en-tête hiérarchique de réseau qui ont été fournies en sortie, ledit moyen de moteur d'acheminement (105) analysant et produisant les informations d'en-tête hiérarchique de réseau.

3. Dispositif selon la revendication 2, ledit module d'ordonnancement d'ingénierie du trafic (101) comprenant en outre :
un moyen de table d'acheminement (106), destiné à enregistrer les informations d'en-tête hiérarchique de réseau produites par le moyen de moteur d'acheminement (105).

4. Dispositif selon l'une quelconque des revendications 1 à 3, dans lequel les informations relatives au chemin d'ingénierie du trafic comprennent une adresse explicite de saut, un paramètre de qualité de service et des informations de classe équivalente d'acheminement (FEC, pour « *Forwarding Equivalent Class* »).

5. Dispositif selon l'une quelconque des revendications 1 à 3, dans lequel le protocole de signalisation comprend au moins soit un protocole de distribution d'étiquettes fondé sur les contraintes (CR-LDP, pour « *Constrained_Based Label Dsitribution Protocol* »), soit une ingénierie du trafic à protocole de réservation de ressources (RVSP_TE, pour « *Resource Reservation Protocol Traffic Engineering* »).

6. Dispositif selon la revendication 5, dans lequel la propriété de temps attribuée comprend au moins une propriété sélectionnée parmi les suivantes : temps de départ, temps de fin, période de temps.

7. Dispositif selon la revendication 6, dans lequel le temps de départ correspond à l'instant de lancement de l'exécution d'au moins une action sélectionnée parmi les suivantes : ladite production du chemin d'ingénierie du trafic, ladite modification du chemin d'ingénierie du trafic et ladite suppression du chemin d'ingénierie du trafic.

8. Dispositif selon la revendication 7, dans lequel le temps de fin correspond à l'instant de cessation de l'exécution d'au moins une action sélectionnée parmi les suivantes : ladite production du chemin d'ingénierie du trafic, ladite modification du chemin d'ingénierie du trafic et ladite suppression du chemin d'ingénierie du trafic.

9. Dispositif selon la revendication 8, dans lequel la période de temps correspond à une période de temps pour l'exécution d'au moins une action sélectionnée parmi les suivantes : ladite production du chemin d'ingénierie du trafic, ladite modification du chemin d'ingénierie du trafic et ladite suppression du chemin d'ingénierie du trafic.
